# EUROPEAN PATENT APPLICATION

(11) **EP 4 708 242 A1**
(43) Date of publication of application: **11.03.2026**
(21) Application number: 25195937.5
(22) Date of filing: 14.08.2025
(51) Int. Cl.: G08B 13/16

(54) **METHOD AND VEHICLE SYSTEM FOR GUNSHOT DETECTION**

(30) Priority: 21.08.2024 US 202463685409 P; 21.07.2025 US 202519275154
(71) Applicant: Harman International Industries, Inc., Stamford, Connecticut 06901 (US)
(72) Inventor: ALBO, Yohan, Stamford, CT, 06901 (US)
(74) Representative: Westphal, Mussgnug & Partner, Patentanwälte mbB

(57) **Abstract**

In at least one embodiment, a vehicle system is provided. The vehicle system includes one or more microphones, a wireless transceiver, and at least one controller. The one or more microphones are configured to receive an audio sound. The wireless transceiver is configured to communicate with one or more entities. The at least one controller is programmed to analyze the audio sound collected via one or more microphones to detect a predefined sound, and responsive to detecting the predefined sound, output a message to a user device via the wireless transceiver.

## Description

### CROSS-REFERENCE TO RELATED APPLICATION

This application claims the benefit of U.S. provisional application Serial No. 63/685,409 filed on August 21, 2024, the disclosure of which is hereby incorporated in its entirety by reference herein.

### TECHNICAL FIELD

The present disclosure generally relates to a vehicle system for detecting audio sounds. More specifically, the present disclosure relates to a method and vehicle system for detecting gunshot events.

### BACKGROUND

In recent years, there have been concerns over increasing gun violence across various regions. One of the difficulties for law enforcement agencies is that it may be difficult to determine the locations where gunshots are fired, causing delays to the response time.

In the meanwhile, many modern vehicles are provided with various sensors configured to collect various audio and video signals. For instance, a vehicle may be provided with one or more microphones to detect audio signals, and one or more cameras to detect video signals.

### SUMMARY

A vehicle system includes one or more microphones, a wireless transceiver, and at least one controller. The one or more microphones are configured to collect an audio sound. The wireless transceiver is configured to communicate with one or more entities. The at least one controller is programmed to analyze the audio sound collected via one or more microphones to detect a predefined sound, and responsive to detecting the predefined sound, output a message to a user device via the wireless transceiver.

A method for a vehicle includes collecting, via one or more microphones, an audio sound; analyzing, via one or more controllers, the audio sound to detect a predefined sound; determining, via an occupancy sensor, a presence of at least one user in the vehicle; and responsive to detecting the predefined sound and the presence of the at least one user, performing at least one of: locking a vehicle door, and closing a vehicle window.

A server device includes an interface and a processor. The interface is configured to communicate with a plurality of vehicles. The processor is programmed to responsive to receiving, from one or more of the plurality of vehicles, one or more gunshot reports including a gunshot event and locations of the one or more vehicles, determine a geofence using the location of the one or more vehicles, and determine, within the geofence, a gunshot area within which the gunshot event occurred using the locations of the one or more vehicles.

### BRIEF DESCRIPTION OF THE DRAWINGS

For a better understanding of the invention and to show how it may be performed, embodiments thereof will now be described, by way of non-limiting example only, with reference to the accompanying drawings, in which:
Figure 1 illustrates an example block topology of a vehicle system having an in-vehicle network of one embodiment of the present disclosure.
Figure 2 illustrates an example flow diagram of a process for detecting gunshot events of one embodiment of the present disclosure.
Figure 3 illustrates an example schematic diagram of a gunshot events detection involving multiple vehicle of one embodiment of the present disclosure.
Figure 4 illustrates an example flow diagram of a process for determining gunshot events via a server of one embodiment of the present disclosure.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

The present disclosure generally provides for a plurality of circuits or other electrical devices. All references to the circuits and other electrical devices, and the functionality provided by each, are not intended to be limited to encompassing only what is illustrated and described herein. While particular labels may be assigned to the various circuits or other electrical devices, such circuits and other electrical devices may be combined with each other and/or separated in any manner based on the particular type of electrical implementation that is desired. It is recognized that any circuit or other electrical device disclosed herein may include any number of microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform operation(s) disclosed herein. In addition, any one or more of the electric devices may be configured to execute a computer-program that is embodied in a non-transitory computer readable medium that is programed to perform any number of the functions as disclosed.

The present disclosure, among other things, includes a system and method for detecting and reacting to sound events, such as gunshot sounds, or loud sound rising public awareness

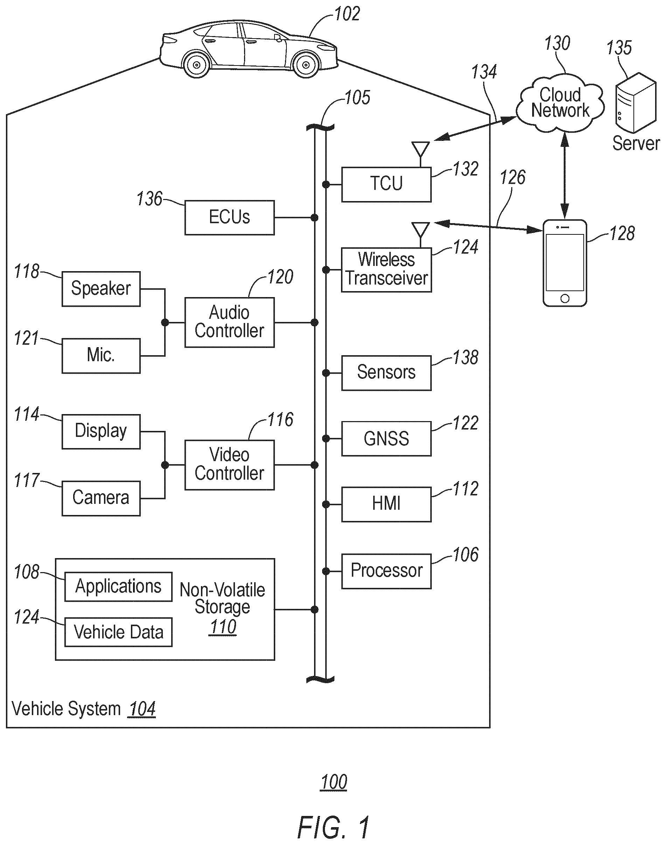

Referring to Figure 1, an example block topology of a system 100 of one embodiment of the present disclosure is illustrated. A vehicle 102 may include various types of automobiles, crossover utility vehicle (CUV), sport utility vehicle (SUV), truck, recreational vehicle (RV), boat, plane, or other mobile machine for transporting people or goods. In many cases, the vehicle 102 may be powered by an engine. As another possibility, the vehicle 102 may be a battery electric vehicle (BEV), a hybrid electric vehicle (HEV) powered by both an internal combustion engine and one or move electric motors, such as a series hybrid electric vehicle (SHEV), a plug-in hybrid electric vehicle (PHEV), a parallel/series hybrid vehicle (PSHEV), or a fuel-cell electric vehicle (FCEV). It should be noted that the illustrated system 100 is merely an example, and more, fewer, and/or differently located elements may be used.

As illustrated in Figure 1, the vehicle 102 may be provided with a vehicle system 104 including one or more processors 106 configured to perform instructions, commands, and other routines in support of the processes described herein. For instance, the vehicle system 104 may be configured to execute instructions of applications 108 to provide features such as vehicle operation controls, multimedia, or the like. Such instructions and other data may be maintained in a nonvolatile manner using a variety of types of computer-readable storage medium 110. The computer-readable medium 110 (also referred to as a processor-readable medium or storage) includes any non-transitory medium that participates in providing instructions or other data that may be read by the processor 106 of the vehicle system 104. Computer-executable instructions may be compiled or interpreted from computer programs created using a variety of current and future programming languages and/or technologies.

The vehicle system 104 may be provided with one or more in-vehicle networks 105 configured to enable the communication between various components of the vehicle 102. The in-vehicle network 105 may be configured to support various communication protocols. For instance, the in-vehicle network 105 may be configured to support, but is not limited to, one or more of an I2C network, a controller area network (CAN), an Ethernet network, and a media-oriented system transport (MOST), as some examples. Furthermore, the in-vehicle network 105, or portions of the in-vehicle network 105, may be a wireless network accomplished via Bluetooth low-energy (BLE), Wi-Fi, ultra-wideband (UWB) or the like.

The vehicle system 104 may be provided with various features allowing the vehicle users to interface with the vehicle system 104. For example, the computing platform 104 may receive input from human machine interface (HMI) controls 112 connected to the in-vehicle network 105 and configured to provide for user interaction with the vehicle 102. As an example, the vehicle system 104 may interface with one or more buttons, switches, knobs, touch screen or other HMI controls configured to invoke functions on the vehicle system 104 (e.g., navigation, audio/video playback, and etc.).

The vehicle system 104 may also drive or otherwise communicate with one or more displays 114 configured to provide visual output to vehicle users by way of a video controller 116 through the in-vehicle network 105. In some cases, the display 114 may be a touch screen further configured to receive user touch input via the video controller 116, while in other cases the display 114 may be a display only, without touch input capabilities. The vehicle system 104 may also drive or otherwise communicate with one or more cameras 117 configured to provide video input by way of the video controller 116 through the in-vehicle network 105. The cameras 117 may include an exterior camera (e.g., backup camera) to provide vehicle users with visual information about the exterior situation of the vehicle 102. Additionally or alternatively, the cameras 117 may include a plurality of camera lenses and configured to enable a surrounding view function. The cameras 117 may further include an in-cabin camera configured to capture images within the cabin of the vehicle 102.

The vehicle system 104 may also drive or otherwise communicate with one or more speakers 118 configured to provide audio output to vehicle users by way of an audio controller 120 connected to the in-vehicle network 105. The vehicle system 104 may also drive or otherwise communicate with one or more microphones 121 configured to capture audio input by way of the audio controller 120. The microphones 121 may include one or more in-cabin microphones configured to capture audio input inside the cabin of the vehicle 102. Additionally or alternatively, the microphones 121 may include one or more exterior microphones configured to capture audio input outside the vehicle 102. In cases that multiple microphones 121 are provided at different locations of the vehicle 102 and capture an audio input, the audio controller 120 and/or the processor 106 may analyze the audio input using techniques such as time difference of arrival (TDOA) to determine the source locations of the audio input. The TDOA technology is based on the principle that soundwaves travel at around 343 m/s in air and arrive at different locations at different time. For instance, if the source of sound comes for the front direction of the vehicle 102, a microphone located in the front of the vehicle may detect the sound earlier than a microphone located in the rear of the vehicle. Therefore, the computing system 104 may determine the direction of the source based on the time difference.

The vehicle system 104 may also be provided location features via a global navigation satellite system (GNSS) controller 122 configured to communicate with multiple satellites and calculate the location of the vehicle 102. The GNSS controller 122 may be configured to support various current and/or future global or regional location systems such as global positioning system (GPS), Galileo, Beidou, Global Navigation Satellite System (GLONASS) and the like. Map data used for address inquiry and route planning may be stored in the storage 110 as a part of the vehicle data 124.

The vehicle system 104 may also be provided with wireless communication capabilities via a wireless transceiver 124 connected to the in-vehicle network 105 and configured to wirelessly communicate with a mobile device 128 of vehicle users via a wireless connection 126. The mobile device 128 may be any of various types of portable computing devices, such as cellular phones, tablet computers, wearable devices, smart watches, smart fobs, laptop computers, portable music players, or other device capable of communication with the vehicle system 104. The wireless transceiver 126 may be configured to support a variety of wireless communication protocols including Wi-Fi, Bluetooth, radio-frequency identification (RFID), near-field communication (NFC), and communicate with a compatible wireless transceiver (not shown) of the mobile device 128 to enable various functions. Additionally or alternatively, the vehicle system 104 may be configured to access a cloud network 130 via the mobile device 128 through wireless connection technologies such as cellular network.

The vehicle system 104 may also be provided with a telematics control unit (TCU) 132 connected to the in-vehicle network 105 and configured to control telecommunication between vehicle 102 and the cloud network 130 through a wireless connection 134 (e.g., using a modem) in addition to or in lieu of via the mobile device 128. For instance, the vehicle system 104 may download and/or upload data from/to the cloud network 130 via the TCU 132 or through the mobile device 128. More specifically, the vehicle system 104 may access one or more remote severs 135 via the cloud network 130. The remote servers 135 may be associated with a variety of entities such as a vehicle manufacturer, a government agency or the like. The remote servers 135 may communicate with the vehicle system 104 via one or more interfaces. Sensor data collected via the microphones 121, cameras 117 as well as other sensors may be uploaded to the remote servers 136 for further processing. It is noted that the term cloud network and remote server are used as general terms in the present disclosure and may include any computing network involving carriers, routers, computers, controllers, circuitry or the like configured to store data and perform data processing functions and facilitate communication between various entities.

The vehicle system 104 may also be provided with various electronic control units (ECUs) 136 connected to the in-vehicle network 105 and configured to perform various operations. For instance, the ECUs 136 may further include a body control module (BCM) configured to perform vehicle body operations (e.g., light, door, window) based on user inputs and sensor data. The ECUs 136 may further include an autonomous driving controller (ADC) configured to provide autonomous driving features of the vehicle 102 based on user inputs and sensor data. The ECUs 136 may further include a heating, ventilation and air conditioning (HVAC) controller configured to provide vehicle cabin climate controls.

The vehicle system 104 may also include various vehicle sensors 138 connected to the in-vehicle network 105 and configured to capture the various sensor data to facilitate vehicle operations. For instance, the sensors 138 may include one or more lidar sensor 138 configured to detect objects within a detection range (e.g., within 200 meters) of the vehicle 102. The sensors 138 may further include or more ultrasonic sensors 138 configured to detect objects within a close range from the vehicle 102. As an example, the ultrasonic sensors 138 may operate as parking sensors to facilitate the parking operations of the vehicle 102. The sensors data may be sent to the ECUs 168 and/or other components of the vehicle system 104 via the in-vehicle network 105. The vehicle sensors 138 may further include a vehicle occupancy sensor configured to detect the presence of one or more users in the vehicle.

The present disclosure proposes a vehicle system for detecting possible sound or gunshot events and determining the location where the events occurred. As discussed above, the vehicle 102 may be provided with various vehicle sensors (including the microphones 121, the cameras 117 and the sensors 138) configured to collect various data. When the vehicle is parked, one or more of the vehicle sensors (e.g., the microphones 121) may still be active and configured to collect sensor data. For instance, the one or more microphones 121 may be active and receive audio input after the vehicle is parked. The audio input may include the sound event and be processed by the processor 106 as well as other components of the computing system 104 for detecting possible gunshot events. The processor 106 may be configured to support one or more artificial intelligence (AI) algorithms for analyzing the audio input. Responsive to detecting the audio input containing a possible gunshot sound, the computing system 104 may notify the user (e.g., via the mobile device 128) about the gunshot event. Additionally, the computing system 104 may further determine the possible direction and location where the gunshots are fired using various techniques such as a TDOA. Additionally, the computing system 104 may report the possible gunshot event and the determined direction to the server 135 of the cloud network.

In an alternative example, the vehicle system 104 may upload the audio input detected via one or more microphones 121 to one or more servers 135 for processing and analysis. Due to the better processing power for the servers 135, the more accurate gunshot event detection results may be available compared with using the process 106 for processing the audio input.

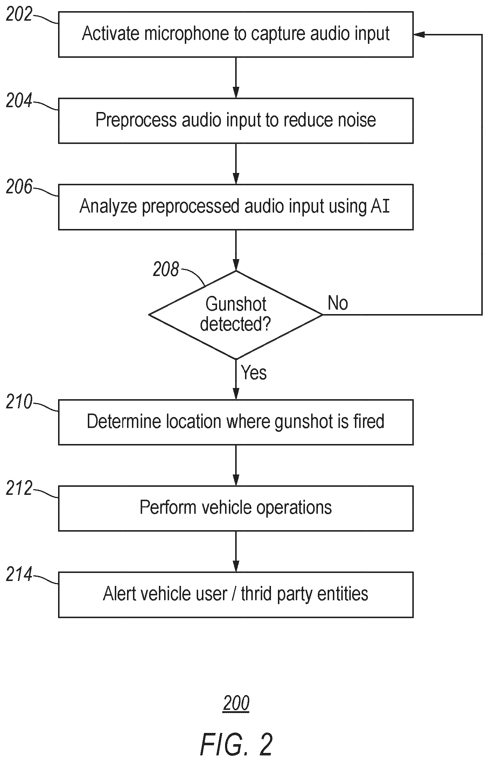

Referring to Figure 2, an example flow diagram of a process 200 for operating the vehicle to detect gunshot events is illustrated. With continuing reference to Figure 1, the process 200 may be implemented via the vehicle system 104 using various component thereof. At operation 202, responsive to detecting the vehicle 102 has been parked, the vehicle system 104 enters into a security monitor mode and activates one or more microphones 121 to collect audio input.

The audio input collected by the microphone 121 may contain various sounds from the environment including noise which is undesirable. At operation 204, the computing system 104 preprocesses the audio input using a filter to reduce the noise contained therein. There are a number of methods and algorithms to filter noise from sound. For instance, the computing system 104 may be configured to filter out the noise using a Kalman filter.

At operation 206, the computing system 104 analyze the preprocessed audio input using AI to determine if gunshot sounds are contained therein. Various AI algorithms may contemplated for for the analysis at operation 206. In general, the AI algorithm for gunshot detection may primarily rely on deep learning technologies. As a few non-limiting examples, the vehicle system 104 may utilize convolutional neural networks (CNNs) to analyze the preprocessed audio input and detect the gunshot sound. The CNNs may be particularly effective at identifying patterns in visual and audio data. In the present disclosure, by converting the audio recording into a spectrogram which is a visual representation of frequencies over time, the CNNs may learn the distinct patterns that differentiate gunshot sounds from other sounds. Additionally or alternatively, the Mel-spectrogram classification may be utilized. The Mel-spectrogram classification approach leverages the Mel scale which is a non-linear frequency scale that approximates human hearing perception. The audio may be converted into a Mel-spectrogram which is essentially a 2D "fingerprint" of the sound, and fed into a CNN for classification and gunshot event detections.

At operation 208, the computing system 104 determines if the audio input contains a gunshot sound based on the AI analysis. If the answer is no indicative of no gunshot sound is detected, the process 200 returns to operation 202 and the vehicle system 104 continues to monitor the environment sound via the one or more microphones 121. Otherwise, if the answer is yes indicative of one or more gunshot sounds are detected, the process proceeds to operation 210.

At operation 210, the computing system 104 determines relevant information associated with the gunshots as detected. For instance, the computing system 104 may be configured to determine the relative direction and thus location of the gunshot event with reference to the vehicle 102. As discussed above, the vehicle 102 may be provided with a plurality of microphones statically placed at various locations of the vehicle 102. As an example, the vehicle 102 may be provided with four microphones 121 placed at four corners of the vehicle 102 body (e.g., at the front and rear bumpers). The computing system 104 may determine the direction of the gunshot event using the time difference when the gunshot sound is received by each of the four microphones. For instance, if the front-left microphone 121 receives the gunshot sound first and the rear-right microphone 121 receives the gunshot sound last, the computing system 104 may determine the relative direction of the gunshot was fired to the front-left of the vehicle 102. The vehicle system 104 may further narrow the angle of the gunshot event relative to the vehicle 102 using the timing information of each microphone 121. With the direction of the gunshot event determined, the vehicle system 104 may further estimate a general distance of the gunshot event with reference to the location of the vehicle 102. For instance, the vehicle system 104 may estimate the distance of the gunshot event using the magnitude of the gunshot sound. Additionally or alternatively, the location of the gunshot event may be more accurately estimated through triangulation using microphone data received from multiple vehicles parked at different locations. In one example, the relevant information associated with the gunshot events may be reported to the server 135 by multiple vehicles. The server 135 may process the information and determine the location (or at least an area) where the gunshots were fired.

In addition to determining the direction and/or location of the gunshot event, at operation 212, the vehicle system 104 performs one or more predefined operations. For instance, the computing system 104 may activate one or more cameras 117 and/or sensors 138 in response to the gunshot event detection in an attempt to capture more information about the incidence. For example, the camera 117 and lidar sensor may detect the any objects potentially associated with the gunshot event (e.g., bullets, gunman) which may be used as evidence. The vehicle system 104 may further perform vehicle body operations such as turning on the headlights (e.g., at night) to facilitate the video capture via the camera 117. The vehicle system 104 may further activate hazard lights to indicate the warning. The vehicle system 104 may further roll up the vehicle windows and/or lock the vehicle doors (e.g., if there is at least one user in the vehicle as detected by the vehicle occupancy sensors 138).

The vehicle system 104 may further activate the vehicle alarm (e.g., via the vehicle speaker 118) to provide an audio warning to people nearby (including the vehicle user). The audio alarm may also create deterrence to the gunman which increases public safety. In some cases, when the vehicle 102 is parked, the microphones 121 may operate in a power saving mode with low sampling rate and sensitivity when the initial gunshot audio input was captured. The vehicle system 104 may further increase the sampling rate and sensitivity of the one or more microphones 121 such that any subsequent audio input may be captured with a higher quality.

At operation 214, the vehicle system 104 sends an alert message to the user of the vehicle 102 and/or to one or more third party entity via the cloud network 130. The alert message may include various information such as an indication that a possible gunshot event has been detected by the vehicle and the parking location of the vehicle when the gunshot event was detected. In addition, the alert message may further include the direction and possible location of the gunshot event as determined by the vehicle system 104. The alert message may further include any sensor data captured via the camera 117 and/or the sensors 138. For instance, a camera image captured immediately after the gunshot event is detected may be included in the alert message. Additionally, the alert message may further include the audio input containing the detected gunshot sound.

The alert message may be sent to the mobile device 128 associated with the user via the wireless connection 126 through the wireless transceiver 124 if the mobile device 128 is located within the transmission range of the wireless transceiver 124. Additionally or alternatively, the vehicle system 104 may send the alert message to the mobile device 128 via the cloud network through the TCU 132. Additionally, the vehicle system 104 may send the alert message to one or more third party entities through the cloud network 130. The third party entities may include various entities such as a law enforcement agency, a paramedic response agency or the like.

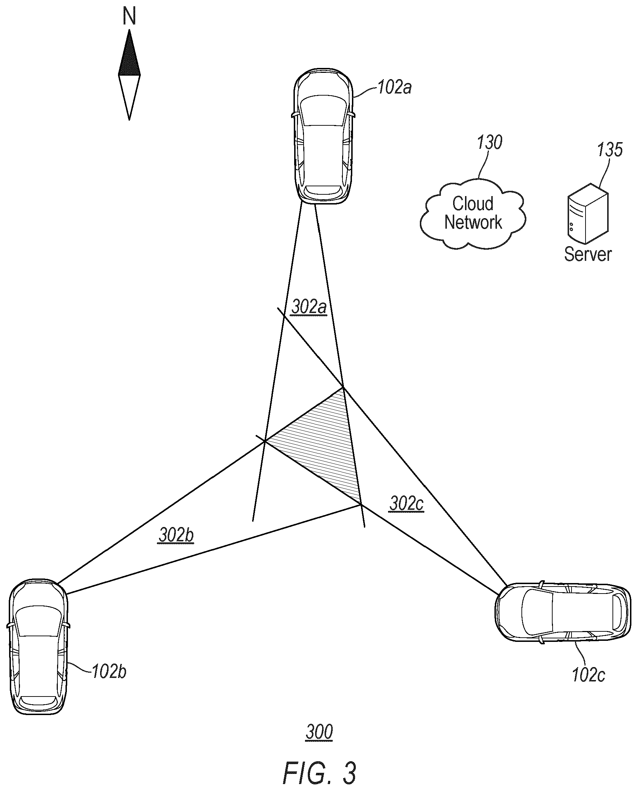

As described above, the audio input analysis may be performed by the vehicle system 104 and/or by the remote server 135. Referring to Figure 3, an example schematic diagram 300 of a gunshot event detection involving multiple vehicles is illustrated. With continuing reference to Figures 1 and 2, in the present example, there are totally three vehicles 102 that detected the gunshot sound at substantially the same time. Each of the three vehicles analyzes the gunshot sound independently and determines a general direction where the gunshot sound is from relative to the vehicle 102. More specifically, a first vehicle 102a that is parked heading north may determine the gunshot sound is from a first direction 302a that is behind the vehicle in the south direction. A second vehicle 102b parked to the southwest of the first vehicle 102a and with the heading to the north may detect the gunshot sound is from a second direction 302b that is to the front-right and thus in the northeast direction to the second vehicle 102b. A third vehicle 102c parked to the east of the second vehicle 102b and with the heading to west may detect the gunshot sound is from a third direction 302c that is to the front-right and thus in the northwest direction to the third vehicle 102c. Each of the three vehicles 102 may independently send an alert message including the information related to the gunshot event to the server 135 associated with one or more third party entities. With the vehicle parking locations and the relative directions 302 to each vehicle 102, the remote server 135 may triangulate the information and determine an area 304 where the gunshot was fired.

Additionally, the remote server 135 may receive inputs from sensors other than the vehicle microphones 121 to more accurately estimate the location where the gunshot was fired. For instance, some cities may be provided with smart sensors at various locations to measure various activities. The sensors may provide audio and video input to the server 135. The server 135 may use the sensors data provided by those sensors in addition to or in lieu of the data received from the vehicles 102 to estimate locations and areas 304.

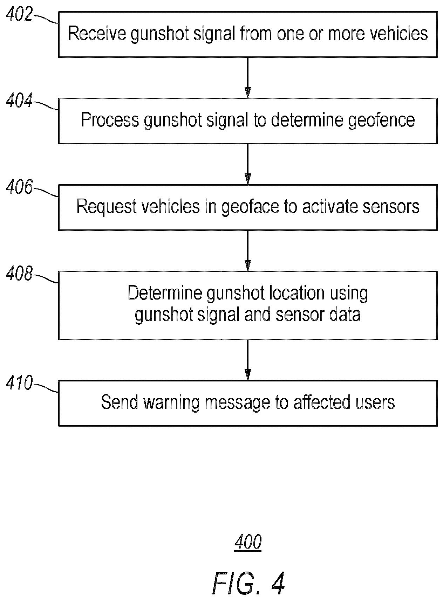

Referring to Figure 4, an example flow diagram of a process 400 for determining gunshot events via the server of one embodiment of the present disclosure. With continuing reference to Figures 1 to 3, the process 400 may be implemented via the server 135 in wireless connection with the plurality of vehicles 102.

At operation 402, the vehicle receives one or more gunshot signals reported by one or more vehicles 102 located within a predetermined distance (e.g., 500 meters). The gunshot signals may include the location of the vehicles and the audio indicative of the gunshot sound captured via one or more microphones 121 of the of the respective vehicles. Additionally, the server 135 may also receives the gunshot signal from one or more city sensors as described above.

At operation 404, the server 135 defines a geofence indicative of a geographic area within which the users may be affected by the possible gunshot event. The geofence may be larger than the estimated area 304 in which the gunshot event occurred. For instance, the area 304 where the gunshot event occurred may be a 1/4 of a square mile but the geofence may be one square mile covering the area 304.

At operation 406, the server 135 identifies all available vehicles within the geofence and requests those vehicles to activate the audio and/or video sensors to collect more information which may be useful for more precisely locate and determine the situation. The available vehicles may include one or more vehicles configured to support the wireless communication with the server 135 via the cloud network 130. For instance, the server 135 may determine there are currently twenty available vehicles located within the geofence and send the request to all of the twenty available vehicles. Depending on the configuration of those available vehicles, some may fully or partially accept the activation requests and start to collect additional video and audio data, and send the additional data for the server 135 for further processing. For instance, the additional data may include subsequent sounds (e.g., including more gunshots), image of suspect vehicles, personnel or the like.

At operation 408, in response to receiving the additional data, the server 135 process the additional data in combination with the original gunshot signals to more precisely determine area 304 where the one or more gunshot events occurred.

At operation 410, the server 135 sends one or more warning messages to people located nearby about the possible gunshot event. As an example, mobile phones located within the geofence may be forwarded with the warning messages.

Although the one or more of the embodiments described above are applied to detecting and reacting a gunshot event, the present disclosure is not limited thereto. The structure and concept of the present disclosure may also be applied to other types of predefined sound events which may require public attention. For instance, the vehicle system 104 and the server 135 may be configured to detect and respond to predefined sound such as a loud bang sound (e.g., volume exceeding a threshold) indicative of a violent activity (e.g., vandalism), human voice (e.g., shout) or the like under essentially the same concept.

The algorithms, methods, or processes disclosed herein can be deliverable to or implemented by a computer, controller, or processing device, which can include any dedicated electronic control unit or programmable electronic control unit. Similarly, the algorithms, methods, or processes can be stored as data and instructions executable by a computer or controller in many forms including, but not limited to, information permanently stored on non-writable storage media such as read only memory devices and information alterably stored on writeable storage media such as compact discs, random access memory devices, or other magnetic and optical media. The algorithms, methods, or processes can also be implemented in software executable objects. Alternatively, the algorithms, methods, or processes can be embodied in whole or in part using suitable hardware components, such as application specific integrated circuits, field-programmable gate arrays, state machines, or other hardware components or devices, or a combination of firmware, hardware, and software components.

While exemplary embodiments are described above, it is not intended that these embodiments describe all possible forms encompassed by the claims. The words used in the specification are words of description rather than limitation, and it is understood that various changes may be made without departing from the spirit and scope of the disclosure. The words processor and processors may be interchanged herein, as may the words controller and controllers.

As previously described, the features of various embodiments may be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics may be compromised to achieve desired overall system attributes, which depend on the specific application and implementation. These attributes may include, but are not limited to strength, durability, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and may be desirable for particular applications.

## Claims

1. A vehicle system comprising:
one or more microphones configured to receive an audio sound;
a wireless transceiver configured to communicate with one or more entities; and
at least one controller programmed to,
analyze the audio received via one or more microphones to detect an predefined sound, and
responsive to detecting the predefined sound, output a message to a user device via the wireless transceiver.

2. The vehicle system of claim 1, wherein the vehicle includes a plurality of microphones located at different locations of a vehicle, and
the at least one controller is further programmed to:
responsive to detecting the audio sound, determine a direction relative to the vehicle where the predefined sound originates by analyzing audio sounds received at the plurality of microphones using time difference of arrival.

3. The vehicle system of claim 2, wherein the at least one controller is further programmed to:
responsive to detecting the predefined sound, output a report to a remote server via the wireless transceiver, wherein the report includes a current location of the vehicle and the direction relative to the vehicle where the predefined sound originates.

4. The vehicle system of claim 1, wherein the at least one controller is further programmed to:
responsive to detecting the predefined sound, perform at least one of: activating a vehicle light, activating a vehicle alarm, and activating a least one of vehicle sensors.

5. The vehicle system of claim 4, wherein the vehicle sensors include at least one of: a lidar sensor, a camera, and an ultrasonic sensor.

6. The vehicle system of claim 1, wherein the controller is further programmed to:
analyze the audio sound using artificial intelligence to detect a predefined sound.

7. The vehicle system of claim 1, wherein the at least one controller is further programmed to:
responsive to detecting the predefined sound, perform at least one of: locking a vehicle door, and closing a vehicle window.

8. The vehicle system of claim 1, wherein the predefined sound includes a gunshot sound.

9. The vehicle system of claim **1,** wherein the predefined sound includes a sound exceeding a volume threshold.

10. The vehicle system of claim 9, wherein the sound exceeding a volume threshold includes a human voice.

11. A server device, comprising:
an interface, configured to communicate with a plurality of vehicles; and
a processor, programmed to,
responsive to receiving, from one or more of the plurality of vehicles, one or more gunshot reports including a gunshot event and locations of the one or more vehicles, determine a geofence using the location of the one or more vehicles, and
determine, within the geofence, a gunshot area within which the gunshot event occurred using the locations of the one or more vehicles.

12. The server device of claim **11,** wherein the processor is further programmed to:
activates one or more sensors of one or more available vehicles that located within the geofence and did not send the gunshot reports to the server.

13. The server of claim **11,** wherein the gunshot report further includes audio data of the gunshot event, the processor is further programmed to:
analyze the audio data to determine of a gunshot sound is detected.

14. The server of claim **11,** wherein the gunshot report further includes one or more directions relative to the one or more vehicles where the gunshot event occurs, the processor is further programmed to:
determine the gunshot area using the directions.

15. The server of claim **11,** wherein the processor is further programmed to:
send, to one or more mobile device within the geofence, a warning message indicative of the gunshot event.
